# EUROPÄISCHE PATENTSCHRIFT

(11) **EP 3 180 988 B1**
(45) Veröffentlichungstag und Bekanntmachung des Hinweises auf die Patenterteilung: **30.11.2022**
(21) Anmeldenummer: 16204903.5
(22) Anmeldetag: 17.12.2016
(51) Int. Cl.: A23C 21/08, A23J 3/08, A23J 3/14, A23J 3/16, A23J 3/22, A23J 3/26, A23P 30/00, A23L 11/00, A23L 35/00, A23L 7/10, A23P 30/20, A23P 30/34

(54) **VERWENDUNG VON TEXTURIERTEN MILCHPROTEINEN ALS KOHLENHYDRATERSATZ IN KOHLENHYDRAT-REICHEN NAHRUNGSMITTELN**
USE OF TEXTURIZED DAIRY PROTEINES AS CARBOHYDRATE SUBSTITUTE IN CARBOHYDRATE-RICH FOOD ARTICLES
UTILISATION DES PROTÉINES DU LAIT TEXTURÉES COMME SUBSTITUT POUR HYDRATES DE CARBONE DANS COMESTIBLES FERTILE EN HYDRATES DE CARBONE

(30) Priorität: 18.12.2015 EP 15201234; 06.02.2016 EP 16154586
(43) Veröffentlichungstag der Anmeldung: 21.06.2017
(73) Patentinhaber: DMK Deutsches Milchkontor GmbH, 27404 Zeven (DE)
(72) Erfinder: DIEKER, Veronika, 26129 Oldenburg (DE); BUCHHOLZ, Anne, 40124 Georgsmarienhütte (DE); ZINK, Ralf, 26160 Bad Zwischenahn (DE)
(74) Vertreter: Fabry, Bernd

(56) Entgegenhaltungen:
- US-A1- 2003 003 194
- US-A1- 2004 161 519
- US-A1- 2004 253 363
- US-A1- 2009 263 553
- US-A1- 2009 263 565
- US-A1- 2012 064 209

## Beschreibung

### GEBIET DER ERFINDUNG

Die Erfindung befindet sich auf dem Nahrungsmittelsektor und betrifft die Verwendung von Proteinprodukten auf Milchbasis, die sich durch spezielle Texturen auszeichnen, als Kohlenhydrataustauschstoffe in Nahrungsmitteln, die typisch einen besonders hohen Gehalt an Kohlenhydraten besitzen.

### STAND DER TECHNIK

Einer Studie der WTO aus dem Jahre 2012 zur Folge, wird sich der Welternährungsbedarf in den nächsten 25 Jahren mindestens verdoppeln. Dieser Herausforderung ist nur mit nachhaltiger Landwirtschaft und dem Erschließen neuer Nahrungsquellen zu begegnen. Ein großes Potential für die Erzeugung lebenswichtiger Grundbausteine der Ernährung ist die Milch, die sich insbesondere durch einen hohen Proteinanteil auszeichnet. Milch- und Molkenproteinkonzentrate spielen beispielsweise heute schon eine wichtige Rolle in der Kleinkindernährung und zeichnen sich gegenüber pflanzlichen Proteinen dadurch aus, dass sie alle essentiellen Aminosäuren in für die Ernährung ausreichender Menge enthalten.

Die ausreichende Versorgung mit Proteinen ist für die menschliche Ernährung von essentieller Bedeutung. Die Deutsche Gesellschaft für Ernährung (DGE) empfiehlt für Erwachsene eine tägliche Proteinzufuhr von 0,8 g pro kg Körpergewicht. Für Kinder, Jugendliche und insbesondere für Säuglinge liegt der Bedarf noch deutlich darüber. Bei älteren Menschen ist häufig eine nicht ausreichende Proteinversorgung festzustellen. Eine zu geringe Proteinaufnahme kann zum Abbau von körpereigenem Protein führen mit der Folge, dass sämtliche durch Proteine regulierte Funktionen im Körper gestört werden.

Vor dem Hintergrund ansteigender alternativer Kostformen (z. B. vegane oder vegetarische Ernährung), bei denen nicht immer eine ausreichende Proteinversorgung - sowohl hinsichtlich der Aufnahmemenge als auch hinsichtlich der Qualität (d. h. Aufnahme von essentiellen Aminosäuren) - sichergestellt ist, gewinnen alternative Formen der Proteinaufnahme an Bedeutung.

Bisher sind auf dem Markt insbesondere solche Nahrungsmittel erhältlich, die per se einen hohen Proteingehalt aufweisen und in denen lediglich die Proteinquelle ausgetauscht wird. In der Regel werden dabei Fleischproteine durch andere Proteine, meist Pflanzenproteine, ersetzt. Typische Fleischersatzprodukte auf Basis von Pflanzenproteinen oder auch Hühnereiprotein (z. B. vegetarische Schnitzel) werden derzeit stark nachgefragt. Das sensorische Profil dieser Produkte ist dem Fleischoriginal vollständig nachgeahmt.

Auch die Anreicherung verschiedener Lebensmittelzubereitungen mit Proteinen zur Erreichung eines gesundheitlichen Vorteils wird momentan forciert, während dies zuvor ausschließlich für Nahrungsmittel bestimmter Zielgruppen (wie z. B. Sportler) vorgesehen war.

Neben einem Trend zur Fleischreduktion in der Ernährung ist bereits seit längerer Zeit ein Trend zu einer kohlenhydratarmen Ernährung ("Low Carb") zu verzeichnen: Eine erhöhte Aufnahme an Kohlenhydraten wird mit einer Reihe von Zivilisationskrankheiten wie Adipositas, Diabetes, Fettstoffwechselstörungen und Herz-Kreislauf-Erkrankungen in Verbindung gebracht. Die Low Carb Ernährung setzt auf eine Kohlenhydratminimierung. Eiweiß- und fettreiche Lebensmittel dürfen hingegen zur Energiegewinnung fast unbegrenzt verzehrt werden.

Es gibt bereits erste Ansätze, in typischen kohlenhydratbasierten Nahrungsmitteln die Kohlenhydrate durch Eiweißrohstoffe zu ersetzen (z. B. Proteinnudeln, Eiweißbrot). Neuartige Proteinprodukte, die an typische kohlenhydratbasierte Nahrungsmittel erinnern, könnten einen zusätzlichen Beitrag zu einer besseren Proteinversorgung leisten und die Vielfalt des Lebensmittelangebots erhöhen. Bei ausreichendem Proteingehalt ist dann auch die Kennzeichnung solcher Nahrungsmittel als "Proteinquelle" bzw. "hoher Proteingehalt" möglich. Gemäß aktuell geltendem Lebensmittelrecht (Verordnung (EG) Nr. 1924/ 2006 des Europäischen Parlaments und des Rates vom 20. Dezember über nährwert- und gesundheitsbezogene Angaben über Lebensmittel - die sogenannte "Health-Claims-Verordnung)" darf eine Auslobung von Proteingehalten wie folgt vorgenommen werden:
- Ein Lebensmittel darf als "Proteinquelle" bezeichnet werden, wenn auf den Proteinanteil mind. 12 % des gesamten Brennwerts des Lebensmittels entfallen.
- Ein Lebensmittel darf mit einem "hohen Proteingehalt" ausgezeichnet werden, wenn auf den Proteingehalt mind. 20 % des gesamten Brennwerts des Lebensmittels entfallen.

Aus dem Stand der Technik sind bereits verschiedene Produkte bekannt, bei denen versucht wird, eine fleischartige Textur unter Einsatz von Molkenproteinen nachzuahmen.
In der EP 1059040 B1 (BONGRAIN) wird ein texturiertes Produkt beschrieben, das bei der Extrusion von Milch oder Käse erhalten wird. Konkret wird beschrieben, wie eine Rohstoffmischung enthaltend Molkenproteine und Wasser in einen Extruder aufgegeben und dann zonenweise zunächst bis auf 130 °C und dann bis auf 200 °C erwärmt wird, wobei der Druck von 0 bis auf maximal 50 bar ansteigt. Anschließend wird das Extrudat in Form gebracht und gekühlt. Es wird u.a. auch eine Mischung genannt, die Molkenproteine zusammen mit Erbsenproteinen und Casein enthält. Das Charakteristische an den Texturen ist, dass sie ein Netzwerk bilden, welches aus gestreckten Fasern mit definiertem Durchmesser besteht, wobei die Fasern Verzweigungen bilden, die etwa nur ein Zehntel ihres Durchmessers ausmachen.

Aus der internationalen Patentanmeldung WO 2006 130025 A1 (FONTERRA) ist beispielsweise ein Verfahren zur Herstellung von extrudierten Milchproteinen für den Einsatz in Snackprodukten bekannt, bei dem als Einsatzstoffe Milchproteine und Stärken verwendet werden.

Auch aus der internationalen Patentanmeldung WO 2012 036910 A1 (FRITO LAY) sind Snackprodukte bekannt, die dadurch erhalten werden, dass man Milchproteine in Gegenwart von Calciumcarbonat unter Druck bearbeitet und dann kontrolliert expandiert.

Gegenstand des Patentes US 6,607,777 B1 (UNIV UTAH) sind Milchproteine mit fleischähnlicher Textur, die durch Extrusion unter Druck und anschließendes Entspannen erhalten werden.

In der US 8,642,109 B2 (SOLAE) werden Sojaprotein-Nuggets beansprucht, die durch gemeinsame Extrusion von Sojaproteinen und Kohlenhydraten erhalten werden.

Gegenstand der US 2004 161 519 A1 (WALSH) sind texturierte Molkenproteine als Fleischersatz, die durch Extrusion von Molkenproteinen zusammen mit Kohlenhydraten erhalten werden. In den Beispielen 9 bis 11 wird mit Verweis auf Beispiel 1 beschrieben, wie eine Mischung aus WPC80 und Sojaprotein unter Zugabe von Maisstärke in einem Doppelschneckenextruder mit Wasser texturiert wird. Die Temperatur am Ausgang des Extruders beträgt linear ansteigend bis 150 °C, das Verfahren verläuft im Bereich von 50 bis 500 psi. Anschließend wird das extrudierte Material getrocknet und zu einem Pulver vermahlen.

Auch die US 2004 253 363 A1 (NAKANO) hat Fleischersatzstoffe zum Gegenstand, wobei diese durch Extrusion von Mischungen aus Pflanzen- und Molkenproteinen erhalten werden. Beispiel 1 beschreibt, wie eine Mischung aus Sojabohnenpulver und WPC80 zusammen mit Wasser in einen Extruder gegeben werden. Das Mischungsverhältnis Protein zu Wasser beträgt 20 kg/h:8 bis 9 l/h. Nach Verlassen des Extruders wurde das Produkt geschnitten und getrocknet bis auf einen Restwassergehalt von 10 Gew.-%.

Die US 2009 263 553 A1 (LICKER) offenbart texturierte Milchproteine, die dadurch erhalten werden, dass man eine Mischung aus 35 Gew.-% Caseinat, 5 Gew.-% Fasern sowie 34 Gew.-% Kartoffelstärke und 24,25 Gew.-% Tapiokastärke bei einem Wassergehalt von 28 bis 34 Gew.-% extrudiert. Das Verfahren wird bei einem Temperaturgradienten von 23-43 °C auf 65 bis 163 °C bei einem Druck von 68 bis 96 bar durchgeführt. Anschließend werden die Extrudate entspannt und geschnitten.

Gegenstand der US 2009 263 565 A1 (RYDER) ist die Herstellung von texturierten Proteinmassen, die im Wesentlichen auf pflanzlichen Proteinen und Gluten beruhen. Die Mischung wird drucklos und ohne Zugabe von Wasser bei einem Temperaturgradienten von 40 auf 150 °C extrudiert.

Nachteilig ist jedoch, dass die Verfahren nur stets eine Textur ermöglichen, was dem Bedürfnis, möglichst viele unterschiedliche Strukturen nachahmen zu können, um flexibel auf den Wunsch der Käufer reagieren zu können, zuwider läuft. Ein weiterer erheblicher Nachteil ist darin zu sehen, dass die Verfahren des Stands der Technik auf die Mitverwendung von Zusatzstoffen, speziell von Stärke, nicht verzichten können, da sich sonst die Texturen nicht stabil herstellen lassen. Bei der zugrundeliegenden Erfindung ist es hingegen gerade erwünscht, den Anteil an Kohlenhydraten in den Texturaten so gering wie möglich zu halten, da die texturierten Proteine in typisch kohlenhydratbasierten Nahrungsmitteln als Kohlenhydratersatz verwendet werden. Dabei sind Geschmack und Mundgefühl den bekannten kohlenhydratreichen Nahrungsmitteln nachgeahmt.

Die Aufgabe der vorliegenden Erfindung hat daher darin bestanden, Texturen auf Basis von Milchproteinen, nämlich Casein bzw. Caseinaten zur Verfügung zu stellen, die sich als Kohlenhydratersatzstoffe eignen, die je nach Verwendung unterschiedlichste Nahrungsmittel in Textur und Mundgefühl nachahmen können und dabei in der Verkostung dem Original so nah als möglich kommen.

### BESCHREIBUNG DER ERFINDUNG

Gegenstand der Erfindung ist die Verwendung von texturierten Milchproteinen, auch als "Texturized Dairy Proteins" (TDP) bezeichnet, dadurch erhältlich oder dadurch erhalten, dass man
(a) eine Mischung bestehend aus
   (a1) 25 bis 75 Gew.-% Casein bzw. Caseinate und
   (a2) 75 bis 25 Gew.-% einem Pflanzenprotein und/oder einem Fasermaterial mit der Maßgabe bereitstellt, dass sich die Mengenangaben zu 100 Gew.-% ergänzen,
(b) die Mischung in Gegenwart von Wasser und/oder Molke unter Anlegen eines Temperaturgradienten von 20 bis 200 °C und einem Druck im Bereich von 100000 Pa (1 -bar) bis 20000000 Pa (200 bar) extrudiert, und
(c) das Extrudat anschließend entspannt,
als Ersatzstoff für Kohlenhydrate und Proteinquelle in Nahrungsmitteln.

Überraschenderweise wurde gefunden, dass durch die Verwendung der mittels Extrusion hergestellten texturierten Milchproteine die Kohlenhydrate in typisch kohlenhydratreichen Nahrungsmitteln ersetzt werden können. Die erhaltenen Nahrungsmittel weisen einen hohen Proteingehalt auf und können beim Verkosten kaum vom kohlenhydratreichen Originalprodukt unterschieden werden. Dabei zeigte sich, dass auch Texturate mit einer fleischähnlichen Textur für den Kohlenhydratersatz in typisch kohlenhydratreichen Nahrungsmitteln geeignet sind.

### EINSATZSTOFFE

Nachfolgend werden die primären Einsatzstoffe beschrieben, die für die Herstellung der texturierten Milchproteine in Frage kommen. Die jeweils bevorzugten Einsatzstoffe bzw. Einsatzverhältnisse führen zu Texturen, deren Verwendung dann auch erfindungsgemäß bevorzugt ist, ohne dass darauf noch einmal hingewiesen werden muss. Als primäre Einsatzstoffe (Komponente a1) für die TDP kommen Milchproteine, speziell Caseine in Betracht.

Molkenproteine, auch englisch Whey Protein genannt, und Casein stellen die beiden wichtigen Proteinfraktionen der Milch von Säugetieren dar. Der Proteinanteil der Kuhmilch von circa 3,3 % setzt sich dabei aus ca. 2,7 % Casein und ca. 0,6 % Molkenprotein zusammen. Die Bezeichnung Molkenprotein wird aus dem Umstand abgeleitet, dass die Proteine dieser Fraktion Hauptbestandteil der Proteine in Molke sind. Molkenproteine sind eine Gruppe verschiedener Albumine und Globuline. Im Einzelnen sind dies:
- alpha-Lactalbumin ca. 20 % (0,1 % in der Milch)
- beta-Lactoglobulin ca. 45 % (0,25 % in der Milch)
- Immunoglobuline ca. 10 %
- Proteosepepton ca. 20 %
- Serumalbumin ca. 5 %

Molkenproteine sind hitzeempfindlich. Beim Aufkochen von Milch ist insbesondere das β-Lactoglobulin für die Haut auf der Oberfläche verantwortlich. Molkenproteine weisen auch einen hohen Gehalt an verzweigtkettigen Aminosäuren auf, wie etwa 20-25 % der meisten Nahrungsproteine. Molkenproteine werden als ernährungsphysiologisch hochwertig eingestuft (hohe biologische Wertigkeit). Sie sind daher Hauptbestandteil der molkenbasierten Eiweißpulver zum Muskelaufbau.

Die einfachste Form des Molkenproteins liegt als Molkenprotein-Konzentrat vor. Es wird hauptsächlich per Ultrafiltration hergestellt. Es besitzt einen höheren Proteingehalt von etwa 70 bis 80 %. Aufgrund der einfachen Herstellung des Rohstoffes in den Molkereien ist es wesentlich günstiger als Molkenprotein-Isolat und -Hydrolysat. Daher wird es von den Nahrungsergänzungsmittel-Anbietern bei der Herstellung ihrer Produkte als erste Wahl angesehen. Aufgrund eines Kohlenhydratanteils von etwa 6 bis 8 % und eines Fettanteils von etwa 4 bis 7 Gew.-% ist der Proteingehalt etwas niedriger als beim Isolat.

Bei der Herstellung von Molkenprotein-Isolat kommen zwei unterschiedliche Verfahren zur Anwendung. Beim lonenaustauschverfahren werden die Molkenproteine an den Ionenaustauscher adsorbiert und eluiert, wodurch die Proteinpräparationen mehr Salze enthalten. Bei einer Herstellung von Molkenprotein-Isolat im Mikrofiltrationsverfahren werden keine Salze verwendet. Dadurch kann eine besonders hohe Reinheit erreicht werden, mit einem Proteinanteil von etwa 90 bis 96 % sowie einem geringen Fett- und Laktosegehalt von weniger als ein Prozent. Des Weiteren ist Molkenprotein-Isolat aufgrund seiner praktischen Laktosefreiheit besonders für Personen mit Laktoseintoleranz geeignet.

Bei der Herstellung von Molkenprotein-Hydrolysat wird das Hydrolyse-Verfahren angewendet. Durch die Hydrolyse (Aufspaltung) der Proteinketten in kleinste Fragmente (Peptide) kann Molkenprotein-Hydrolysat vom Körper schneller resorbiert werden. Je höher der Hydrolysegrad, desto hochwertiger und teurer das Protein. Als Nachteil ist der bittere Geschmack zu nennen. Molkenprotein-Hydrolysat findet deshalb seine Anwendung hauptsächlich in Aminosäurentabletten und -kapseln, wo der bittere Geschmack nur eine untergeordnete Rolle spielt. In geringen Anteilen werden Molkenprotein-Hydrolysate Mischungen verschiedener hochwertiger Proteine (Mehrkomponenten-Proteine) beigegeben.

Casein stellt ebenfalls eine Mischung aus mehreren Proteinen (αS1-, αS2-, β-, κ-Casein) dar und dient dem Speicher und Transport von Protein, Calcium und Phosphat zum Neugeborenen. Casein bildet in der Milch zusammen mit Calciumphosphat und anderen Bestandteilen Micellen. Typische Beispiele für geeignetes Casein umfassen sowohl Caseine, die durch Säurebehandlung gewonnen werden (auch als Caseinate bezeichnet), als auch micellares Casein aus der Mikrofiltration von Magermilch.

Im Zuge der Erfindung wurde die Feststellung gemacht, dass es für die Texturierung der Endprodukte entscheidend ist, dass die Extrusion zusammen mit Pflanzenproteinen erfolgt, die den Produkten eine Textur verleiht, wie sie dem Empfinden nach für Geflügel, Fisch, Pilze, Tofu oder auch Erdnussflips typisch ist. Darüber hinaus kann sich die Zugabe von pflanzlichen Fasern als vorteilhaft für die Produkttextur erweisen. Solche Fasermaterialien können Bestandteil von pflanzlichen Proteinkonzentraten sein. Alternativ werden Fasern separat als Rohstoff zugegeben (z. B. bei Verwendung von Pflanzenproteinisolaten). Die Faltung der Eiweißstruktur dieser pflanzlichen Proteine hat sich darüber hinaus ebenfalls als sehr vorteilhaft erwiesen, wenn es darum geht, den Produkten eine Textur zu verleihen.

Die Komponente (a2) wird in einem Anteil von 25 bis 75 Gew.-%, vorzugsweise 30 bis 60 Gew.-% und insbesondere 40 bis 50 Gew.-% bezogen auf die Gesamtmenge der Komponenten (a1) und (a2) eingesetzt.

### EXTRUSION UND FORMGEBUNG

Nachfolgend wird die Herstellung der texturierten Milchproteine beschrieben. Die jeweils bevorzugten Verfahrensbedingungen führen zu Texturen, deren Verwendung dann auch erfindungsgemäß bevorzugt ist, ohne dass darauf noch einmal hingewiesen werden muss. Die Extrusion der Protein/Fasermischungen macht die Mitverwendung von Wasser und/oder Molke unverzichtbar.

Die Ausbildung unterschiedlicher Texturen hängt von den Betriebsbedingungen des Extruders ab. Vorzugsweise werden die Mischungen aus (a1) Milchproteinen sowie (a2) Pflanzenproteinen bzw. Fasern unter Anlegen eines Temperaturgradienten extrudiert, der von etwa 40 °C auf etwa 170 °C sowie eines Druckgradienten extrudiert, der von 1 bar auf etwa 120 bar eingestellt wird.

Ebenfalls für die Ausprägung unterschiedlicher Texturen wichtig ist die Menge an Flüssigkeit bei der Extrusion. Dabei unterscheidet man zwischen so genanntem "low moisture" und "high moisture" Verfahren.

### Low moisture Verfahren

Im ersten Fall werden die Mischungen in Gegenwart von etwa 10 bis etwa 50 Gew.-% und insbesondere etwa 20 bis etwa 40 Gew.-% Wasser und/oder Molke - bezogen auf die Gesamtmenge der eingesetzten Rohstoffe, d. h. Menge der Komponenten (a1+a2) und Wasser bzw. Molke - extrudiert. Die Extrusion erfolgt unter Druck, der sich insbesondere aus den Parametern Drehzahl und Temperatur ergibt und auf 3000000 bis 12000000 Pa (30-bis 120-bar und insbesondere 5000000 bis 11000000Pa (50 bis 110 bar) eingestellt wird. Die Extrusion wird vorzugsweise in einem Doppelschneckenextruder durchgeführt, der über gleichlaufende scherintensive Schnecken verfügt.

Die Extrusion findet zudem unter Anlegung eines Temperaturgradienten von etwa 20 bis etwa 200 °C und insbesondere etwa 40 bis etwa 170 °C statt. Darunter ist zu verstehen, dass der Extruder, der über einen außen liegenden Heiz-/Kühlmantel und über eine Reihe von separat zu steuernden Temperaturzonen verfügt, im vorderen Bereich eine niedrigere Temperatur als im hinteren Teil aufweist. Eine große Differenz von Druck und Temperatur zwischen Extruderinnenraum und Umgebung begünstigt die Expansion der erhaltenen Extrudate nach dem Austritt aus dem Extruder.

Je nach Anlage sind Drehzahlen von etwa 200 bis etwa 2.000 Upm einzustellen.

Eine typische Verarbeitungsweise von Produkten nach dem low moisture Verfahren besteht darin, diese nach Verlassen des Extruders in einem Schritt auf Normaldruck zu entspannen und die resultierende Masse in eine stückige Form zu bringen. Unmittelbar beim Verlassen des Extruders weist das Produkt noch eine Temperatur von etwa 120 bis etwa 140 °C auf, was dazu führt, dass das Wasser bzw. der Wasseranteil der Molke fast vollständig verdampft. Das Produkt bläht auf und nimmt eine Textur an, die man am ehesten mit der von Erdnussflips vergleichen kann. Die Verarbeitung der Masse kann durch eine formgebende Düse und anschließender Schneidvorrichtung erfolgen. Die Produkte zeichnen sich gegenüber stärkebasierten Extrudaten dadurch aus, dass sie nach Einlegen in Wasser formstabil bleiben. Gegebenenfalls ist eine Nachbehandlung der durch das beschriebene Verfahren erzeugten Produkte in Form einer Nachtrocknung vorzunehmen.

### High moisture Verfahren

Im zweiten Fall werden die Mischungen in Gegenwart von etwa 50 bis etwa 75 Gew.-% und insbesondere etwa 55 bis etwa 60 Gew.-% Wasser und/oder Molke - bezogen auf die Gesamtmenge der eingesetzten Rohstoffe, d. h. Menge der Komponenten (a1+a2) und Wasser bzw. Molke - extrudiert. Die Extrusion erfolgt wieder unter Druck, der sich insbesondere aus den Parametern Drehzahl und Temperatur ergibt und auf 500000 bis 5000000 Pa (5 bis 50 bar) und insbesondere 1000000 bis 3000000 Pa (10 bis 30 bar) eingestellt wird. Die Extrusion wird auch bei dieser Variante vorzugsweise in einem Doppelschneckenextruder durchgeführt, der über gleichlaufende scherintensive Schnecken verfügt.

Die Extrusion findet zudem unter Anlegung eines Temperaturgradienten von ebenfalls 20 bis 200 °C und insbesondere 40 bis 170 °C statt. Zwingend ist der Temperaturverlauf hier nicht linear, sondern steigt vom vorderen zum mittleren Teil des Extruders auf die höchste Temperatur an, ehe sie dann zum Ende wieder abnimmt. Ein solches Profil kann beispielsweise den folgenden Verlauf zeigen: Anstieg von 20 bis 40 °C auf 160 bis 200 °C (in der Mitte des Extruders) und Abfall (zum Ausgang des Extruders) auf 100 bis 140 °C. Ein derartiges Profil sorgt für besonders stabile und gleichmäßige Texturen.

Da die Produkte einen höheren Wasseranteil aufweisen, liegt die Viskosität während der Verarbeitung niedriger als beim low-moisture Verfahren. Je nach Anlage sind Drehzahlen von etwa 200 bis etwa 2.000 Upm einzustellen. Die Extrusion kann auch hier anstelle von Wasser mit Molke oder einer Mischung aus Wasser und Molke durchgeführt werden.

Auch die Art der Kühlung, Entspannung und Weiterverarbeitung kann einen Einfluss auf die Textur haben. Im einfachsten Fall werden die Produkte nach Verlassen des Extruders an der Luft oder in einem Kühlbad entspannt.

Vorzugsweise werden die Mischungen jedoch nach Verlassen des Extruders unter Beibehaltung des Druckes in einen Kühlkanal geleitet, sodass erst auf diese Weise die gekühlte Masse bei Normaldruck austritt. Unter einem Kühlkanal ist ein einfaches Bauteil zu verstehen, das z. B. aus einem Rohr mit einem gekühlten Außenmantel besteht. Die Extrusionsmasse wird an einem Ende eindosiert und verlässt den Kühlkanal am anderen Ende und wird dabei auf Umgebungsdruck gebracht. Typischerweise weist der Kühlkanal über seine ganze Länge einen konstanten Querschnitt auf. Länge und Querschnitt des Kühlkanals sind abhängig von der Extrudergröße und dem daraus resultierenden Produktdurchsatz. Der Einsatz eines Kühlkanals ist für den Aufbau mancher Texturen mitentscheidend, denn durch das Fördern der Extrusionsmischung durch das Rohr erfolgt eine Kühlung von außen in das Innere der Masse, wodurch eine besonders faserige Struktur erzeugt wird.

Die gekühlte Masse weist beim Austritt noch eine Temperatur von etwa 50 bis 80 °C auf und wird anschließend in stückige Form gebracht, beispielsweise indem man den Texturatstrang mit Messern portioniert. Anschließend empfiehlt sich zur weiteren Texturierung, die Massen mindestens einer der beiden folgenden Maßnahmen zu unterwerfen.
(i) Tiefkühlung und Auftauen und/oder
(ii) Kochen in Brühe.
Beide Maßnahmen dienen dazu, die Struktur zu lockern.

### GEWERBLICHE ANWENDBARKEIT

Die Menge der texturierten Milchproteine in den Nahrungsmitteln ist unkritisch und kann grundsätzlich zwischen 1 und 99 Gew.-% betragen. Sie richtet sich danach, wie hoch der Anteil an Kohlenhydraten typischerweise in den Lebensmitteln ist, wobei dieser ganz oder auch nur teilweise ersetzt werden kann. Die texturierten Milchproteine der vorliegenden Erfindung aus dem Low Moisture oder dem High Moisture Verfahren sind beide für die Verwendung in solchen Nahrungsmitteln geeignet, die bekanntermaßen hinsichtlich ihrer Nährwerte vor allem auch Kohlenhydrate in großen Mengen enthalten. Je nach Art der Nahrungsmittelzubereitung und der Textur sind bevorzugt Texturate zu verwenden, die gemäß einer der beiden Verfahrensvarianten hergestellt werden.

Typische Beispiele für Nahrungsmittelzubereitungen, die üblicherweise einen hohen Kohlenhydratgehalt aufweisen und in denen die Produkte der vorliegenden Erfindung Verwendung finden können, umfassen Brotwaren, Nudelprodukte, Gemüsegerichte, speziell Kartoffelgerichte, Reisgerichte, aber auch Süßwaren wie Kuchen, Puddings, Aufläufe und dergleichen.

### BEISPIELE

### BEISPIEL 1

72 Gew.-% einer Trockenmischung bestehend aus 32 Gew.-% Casein (Säurecasein, mindestens 95 % Protein in der Trockenmasse.) und 68 Gew.-% Sojaproteinkonzentrat (mindestens 67 % Protein in der Trockenmasse) wurde mit 28 Gew.-% Wasser auf einen Doppelschneckenextruder aufgegeben, der aus 10 separaten Gehäuseeinheiten bestand (Zone 1: nicht temperiert; Zone 2-10: einzeln temperierbar), an die ein Temperaturgradient von 40 auf 170 °C angelegt war. Die Mischung wurde mit einer Drehzahl von 300 Upm gefördert, wobei sich im Extruder ein Druck von etwa 50 bar aufbaute. Die noch etwa 130 °C heiße und plastische Masse wurde kontinuierlich aus dem Extruder gefördert und sofort über eine Lochplatte (Bohrung von 4 mm Durchmesser) und rotierende Messer geführt und in stückige Form gebracht. Dabei entspannte sich das Produkt auf Umgebungsdruck, wobei das Wasser bis auf eine geringe Restfeuchte verdampfte und die resultierende Masse stark aufblähte. Der Durchsatz betrug ca. 50 kg/ h. Es wurde eine Erdnussflip-artige Proteintextur erhalten, die sich durch Form- und Texturstabilität in Wasser auszeichnete.

### BEISPIEL 2 (Vergleichsbeispiel)

45 Gew.-% einer Trockenmischung bestehend aus 72 Gew.-% eines Molkenproteinkonzentrats (mindestens 80 % Protein in der Trockenmasse) sowie 14 Gew.-% Sojaproteinkonzentrat (mindestens 67 % Protein in der Trockenmasse) und 14 Gew.-% Erbsenproteinisolat (mindestens 84 % Protein in der Trockenmasse) wurden mit 55 Gew.-% Wasser auf einen Doppelschneckenextruder aufgegeben, der aus 10 separaten Gehäuseeinheiten bestand (Zone 1: nicht temperiert; Zone 2-10: einzeln temperierbar), an die ein Temperaturgradient im Bereich von 20 bis 200 °C angelegt war. Die Mischung wurde mit einer Drehzahl von etwa 600 Upm gefördert, wobei sich im Extruder ein Druck von etwa 20 bis 30 bar aufbaute. Das Produkt wurde ohne Entspannung in einen Kühlkanal gefördert, der mit einem Kühlmantel umgeben war. Beim Kühlkanal handelte es sich um ein etwa 1 m langes Bauteil mit einem rechteckigen Querschnitt (Höhe: 1,3 cm; Breite 4,9 cm). Die Temperatur des Kühlmantels wurde über ein separates Kühlaggregat auf 30 °C eingestellt. Die extrudierte Masse wurde kontinuierlich mit einem Durchsatz von ca. 14 kg/ h aus dem Kühlkanal gefördert und auf Umgebungsdruck entspannt. Der 70 °C warme Pressstrang wurde mit Messern portioniert und diese dann nach Abkühlen auf -18 °C tiefgefroren.

### BEISPIEL 3

### "Proteinknödel" mit texturierten Milchproteinen (Herstellung der Texturate nach dem Low Moisture Verfahren)

**Variante 1: herzhaft.** 60 g TDP gemäß Beispiel 1 in ausreichend Wasser (Verhältnis mindestens 1:5) für ca. 20 Stunden einweichen. Die Texturate über einem Sieb abtropfen lassen und in einem perforierten Tuch ausdrücken. Die TDP im Thermomix zerkleinern (Stufe 5; 5 s). Zerkleinerte TDP, 1 Ei, 1,5 g Gemüsebrühe instant und 0,5 g Salz mit einem Handrührgerät zu einer Masse verkneten. Die Masse in geeignete Kochbeutel füllen (ca. 50-75 g Masse je Kochbeutel) und verdichten, die Beutel luftdicht verschließen. Die gefüllten Beutel mit einer Nadel leicht perforieren. Die Knödel in kochendem Salzwasser ca. 12-15 Minuten gar ziehen lassen (Kerntemperatur 80 °C). Die Knödel unter fließend kaltem Wasser kurz abschrecken und aus dem Beutel herauslösen. Die Knödel können alternativ zu Semmel- oder Kartoffelknödeln z. B. mit Braten und Bratensauce serviert werden.

**Variante 2: süß.** 60 g TDP gemäß Beispiel 1 in ausreichend Wasser (Verhältnis mindestens 1:5) für ca. 20 Stunden einweichen. Die Texturate über einem Sieb abtropfen lassen und in einem perforierten Tuch ausdrücken. Die TDP im Thermomix zerkleinern (Stufe 5; 5 s). Zerkleinerte TDP, 1 Ei, 30 g Zucker, 7 g Vanillinzucker und 1 Prise Zimt mit einem Handrührgerät zu einer Masse verkneten. Die Masse in geeignete Kochbeutel füllen (ca. 50-75 g Masse je Kochbeutel) und verdichten, die Beutel luftdicht verschließen. Die gefüllten Beutel mit einer Nadel leicht perforieren. Die Knödel in kochendem Salzwasser ca. 12-15 Minuten gar ziehen lassen (Kerntemperatur 80 °C). Die Knödel unter fließend kaltem Wasser kurz abschrecken und aus dem Beutel herauslösen. Die Knödel können wie Marillenknödel als Dessert oder süße Mahlzeit verzehrt werden.

### BEISPIEL 4

### "Proteinporridge" mit texturierten Milchproteinen (Herstellung der Texturate nach dem Low Moisture Verfahren)

45 g TDP gemäß Beispiel 1 in ausreichend Wasser (Verhältnis mindestens 1:5) für ca. 20 Stunden einweichen. Die Texturate über einem Sieb abtropfen lassen und in einem perforierten Tuch ausdrücken. Die TDP im Thermomix zerkleinern (Stufe 5; 3 s). Zerkleinerte TDP, 100 g Milch und 15 g Kakaopulvergetränk im Thermomix bei Stufe 3 bei einer Temperatur von 80 °C für 3 Minuten zu einem Proteinporridge verarbeiten.

### BEISPIEL 5

### Protein-Gemüse-Taler mit texturierten Milchproteinen (Herstellung der Texturate nach dem Low Moisture Verfahren oder High Moisture Verfahren)

30 g TDP gemäß Beispiel 1 (für ca. 20 h in Wasser eingeweicht, abgetropft und ausgedrückt, danach zerkleinert) oder 2 (in Brühe gekocht und anschließend zerkleinert), 2 Frühlingszwiebeln, 70 g Mungobohnkeimlinge (Abtropfgewicht, Konservenware), 50 g geriebener Käse (z. B. Gouda), 1 Ei, 0,7 g Salz, 0,7 g Pfeffer schwarz gemahlen, 0,7 g Oregano gemahlen zu einer Masse verkneten. Aus der Masse frikadellenartige Taler formen. Die Taler in etwas Rapsöl in einer Pfanne von beiden Seiten braten.

### BEISPIEL 6

### "Proteinpommes" mit texturierten Milchproteinen (Herstellung der Texturate nach dem Low Moisture Verfahren)

TDP gemäß Beispiel 1 in ausreichend Flüssigkeit (Verhältnis mindestens 1:5) für ca. 20 Stunden einweichen. Als Flüssigkeit eignen sich beispielsweise Fruchtsaft, erkalteter Kaffee oder Wasser. Die TDP anschließend über einem Sieb gut abtropfen. Zur Geschmacksgebung können die TDPs auch in Gewürzen oder Gewürzmischungen (z. B. Pommes-Frites-Gewürz, Paprika, Zimt) leicht gewälzt werden. Die TDPs auf ein mit Backpapier ausgelegtes Backbleck geben und im vorgeheizten Backofen bei 200 °C Ober- und Unterhitze 5 Minuten backen. Die Protein-"Pommes" können mit einem süßen oder herzhaften Dip serviert werden.

### BEISPIEL 7

### Süße Nuggets mit texturierten Milchproteinen (Herstellung der Texturate nach dem Low Moisture Verfahren oder High Moisture Verfahren)

Herstellung eines Protein-Binders: eine Trockenmischung aus 50 g Molkenprotein-konzentrat, 12 g Weizenquellmehl, 12 g Magermilchpulver, 9 g Zucker, 15 g Vanillinzucker und 12 g Kartoffelstärke (kaltquellend) herstellen. Die Trockenmischung in 115 g Wasser einrühren.

**Variante 1** (Herstellung der Texturate gemäß Beispiel 1 - Low Moisture Verfahren): 60 g TVP gemäß Beispiel 1 in ausreichend Wasser (Verhältnis mindestens 1:5) oder Fruchtsaft für ca. 20 Stunden einweichen. Anschließend die Texturate über einem Sieb abtropfen lassen und in einem perforierten Tuch ausdrücken. Die Texturate mit dem Protein-Binder vermengen und in Paniermehl wälzen. Aus der Masse Nuggets formen. Die Nuggets anschließend in heißem Öl in der Fritteuse zunächst 50 s vorfrittieren. Direkt vor dem Verzehr werden die Nuggets erneut in heißem Öl für 50 s frittiert. Die Zubereitung kann alternativ auch in der Pfanne erfolgen. Dazu werden die Nuggets in etwas Rapsöl von beiden Seiten goldbraun gebraten.

**Variante 2** (Herstellung der Texturate gemäß Beispiel 2 (Vergleichsbeispiel) - High Moisture Verfahren):
200 g TVP gemäß Beispiel 2 werden 7 bis 10 Minuten in kochendem Wasser (leicht gesalzen) gekocht. Aus den Strängen werden entsprechende Nuggetformen ausgestanzt (industriell: Ausformung über Formmaschinen). Diese werden kurz in die Bindelösung getaucht und anschließend in Paniermehl gewälzt (industriell: Trockenpanieranlage). Danach werden die Nuggets in heißem Öl in der Fritteuse zunächst 50 s vorfrittiert. Direkt vor Verzehr werden die Nuggets erneut in heißem Öl in der Fritteuse 50 s frittiert. Alternativ können die Texturate auch zerkleinert werden (beispielsweise mit Hilfe einer Küchenmaschine) und dann mit dem Proteinbinder verklebt werden. Anschließende Verarbeitung wie oben beschrieben. Die Zubereitung der Nuggets kann alternativ zur Fritteuse auch in der Pfanne erfolgen. Dazu werden die Nuggets in etwas Rapsöl von beiden Seiten goldbraun gebraten.

### BEISPIEL 8

### Tiramisu (Herstellung der Texturate nach dem Low Moisture Verfahren)

500 g Mascarpone, 150 ml Milch, 70 g Zucker, 8 g Vanillin-Zucker, 40 ml Amaretto mit dem Handrührgerät zu einer glatten Masse verrühren. 60 g TDP gemäß Beispiel 1 in 450 ml kaltem Kaffee über Nacht einweichen (ca. 15 bis 20 Stunden). Die Texturate am nächsten Tag gut abtropfen lassen und die Hälfte der Texturate in einer tiefen Schale verteilen. Darauf die Hälfte der Mascarponecreme verteilen. Die Schichtung in dieser Art einmal wiederholen. Das Tiramisu mindestens 3 h kalt stellen. Vor dem Servieren mit Kakaopulver bestäuben.

### BEISPIEL 9

### Kuchen-/ Tortenboden ohne Backen (Herstellung der Texturate nach dem Low Moisture Verfahren)

100 g TDP gemäß Beispiel 1 in reichlich Wasser oder anderer Flüssigkeit (ca. 3 I) über Nacht (ca. 15-20 h) einweichen. Die TDP am nächsten Tag abtropfen lassen und mit Hilfe eines perforierten Tuches ausdrücken. Die TDP im Thermomix zerkleinern (Stufe 7; 5 s). Anschließend 70 g weiche Butter zugeben und mit den TDP vermengen (Stufe 3; 1 Min). Eine Springform (Durchmesser: 26-28 cm) mit Backpapier auslegen. Die Butterbrösel auf dem Boden verteilen und festdrücken. Den Kuchen-/Tortenboden für mindestens 1 h in den Kühlschrank stellen. Anschließend den Boden nach Belieben mit einer Creme- und/ oder Fruchtschicht versehen. Den Kuchen bis zum Servieren kalt stellen.

### BEISPIEL 10 (Vergleichsbeispiel)

### Proteinpasta (Herstellung der Texturate nach dem High Moisture Verfahren)

200 g TDP gemäß Beispiel 2 (Vergleichsbeispiel) mit einem Sparschäler in feine Streifen schneiden. Die Proteinstreifen in reichlich kochendem Salzwasser 5 Minuten kochen. Die Pasta mit Sauce servieren.

### BEISPIEL 11

### Milchpuffer (Herstellung der Texturate nach dem Low Moisture Verfahren und High Moisture Verfahren)

85 g TDP gemäß Beispiel 1 in 500 g Apfelsaft einweichen (mindestens 5 h). Die TDP abtropfen lassen und mit 300 g TDP gemäß Beispiel 2 (zerstückelt) im Thermomix zerkleinern (Stufe 7; 6 s). Die TDP mit 250 g Magerquark, 40 g Zucker, 1 Ei, 45 g Molkenproteinkonzentrat und 1 Prise Salz vermengen und gut verrühren. Aus der Masse kleine ovale Plätzchen formen. Die Puffer von beiden Seiten in etwas Rapsöl braten.

### BEISPIEL 12

### Süßer Auflauf (Herstellung der Texturate nach dem Low Moisture Verfahren)

85 g TDP gemäß Beispiel 1 in 500 g Apfelsaft einweichen (mindestens 5 h). Die TDP abtropfen lassen und im Thermomix zerkleinern (Stufe 7; 4 s). Die TDP mit 250 g Magerquark, 30 g Zucker, 1 Ei und 1 Prise Salz vermengen. Die Masse in kleine feuerfeste Auflaufformen füllen und im vorgeheizten Backofen bei 200 °C Ober- und Unterhitze 15 Minuten backen.

## Patentansprüche

1. Verwendung von texturierten Milchproteinen, dadurch erhältlich oder dadurch erhalten, dass man
(a) eine Mischung bestehend aus
(a1) 25 bis 75 Gew.-% Casein bzw. Caseinate und
(a2) 75 bis 25 Gew.-% einem Pflanzenprotein und/oder einem Fasermaterial mit der Maßgabe bereitstellt, dass sich die Mengenangaben zu 100 Gew.-% ergänzen,
(b) die Mischung in Gegenwart von Wasser oder Molke unter Anlegen eines Temperaturgradienten von 20 bis 200 °C und einem Druck im Bereich von 100000 Pa (1 bar) bis 20000000 Pa (200 bar) extrudiert, und
(c) das Extrudat anschließend entspannt,
als Ersatzstoff für Kohlenhydrate und Proteinquelle in Nahrungsmitteln.

2. Verwendung nach Anspruch 1, **dadurch gekennzeichnet, dass** man texturierte Milchproteine einsetzt, bei denen die Komponente (a2) Pflanzenproteine und/oder pflanzliches Fasermaterial darstellt.

3. Verwendung nach mindestens einem der Ansprüche 1 bis 2, **dadurch gekennzeichnet, dass** man texturierte Milchproteine einsetzt, bei denen man die Mischungen aus (a1) Casein bzw. Caseinate sowie (a2) Pflanzenproteinen bzw. Fasermaterial in Gegenwart von 10 bis 50 Gew.-% Wasser und/oder Molke - bezogen auf die Gesamtmenge der eingesetzten Rohstoffe, d. h. Menge der Komponenten (a1+a2) und Wasser und/oder Molke - extrudiert.

4. Verwendung nach mindestens einem der Ansprüche 1 bis 2, **dadurch gekennzeichnet, dass** man texturierte Milchproteine einsetzt, bei denen man die Mischungen aus (a1) Casein bzw. Caseinate sowie (a2) Pflanzenproteinen bzw. Fasermaterial in Gegenwart von 50 bis 75 Gew.-% Wasser und/oder Molke - bezogen auf die Gesamtmenge der eingesetzten Rohstoffe, d. h. Menge der Komponenten (a1+a2) und Wasser und/oder Molke - extrudiert.

5. Verwendung nach mindestens einem der Ansprüche 1 bis 4, **dadurch gekennzeichnet, dass** man texturierte Milchproteine einsetzt, bei denen man die Mischungen aus (a1) Casein bzw. Caseinate sowie (a2) Pflanzenproteinen bzw. Fasermaterial unter Anlegen eines Temperaturgradienten extrudiert, der von 40 °C auf 180 °C führt.

6. Verwendung nach mindestens einem der Ansprüche 1 bis 5, **dadurch gekennzeichnet, dass** man texturierte Milchproteine einsetzt, bei denen man die Mischungen aus (a1) Casein bzw. Caseinate sowie (a2) Pflanzenproteinen bzw. Fasermaterial unter Anlegen eines nicht-linearen Temperaturgradienten ausgehend von einer Temperatur 20 bis 40 °C am Einlass über eine Spitzentemperatur von 160 bis 200 °C in der Mitte und einem Abfall auf 100 bis 140 °C am Ausgang des Extruders extrudiert.

7. Verwendung nach mindestens einem der Ansprüche 1 bis 6, **dadurch gekennzeichnet, dass** man texturierte Milchproteine einsetzt, bei denen man die Mischungen aus (a1) Casein bzw. Caseinate sowie (a2) Pflanzenproteinen bzw. Fasermaterial unter Anlagen eines Druckgradienten extrudiert, der je nach Verfahren und Anlage von 100000 Pa (1 bar) auf 500000 bis 20000000 Pa (200 bar) führt.

8. Verwendung nach mindestens einem der Ansprüche 1 bis 7, **dadurch gekennzeichnet, dass** man texturierte Milchproteinen einsetzt, die nach Verlassen des Extruders in einem Schritt auf Normaldruck entspannt worden und in stückige Form gebracht worden sind.

9. Verwendung nach mindestens einem der Ansprüche 1 bis 8, **dadurch gekennzeichnet, dass** man texturierte Milchproteinen einsetzt, die nach Verlassen des Extruders in einem Kühlbad entspannt worden sind.

10. Verwendung nach mindestens einem der Ansprüche 1 bis 9, **dadurch gekennzeichnet, dass** man texturierte Milchproteinen einsetzt, die nach Verlassen des Extruders unter Druck in einen Kühlkanal geleitet, abgekühlt und bei Normaldruck ausgeschleust worden sind.

11. Verwendung nach mindestens einem der Ansprüche 1 bis 10, **dadurch gekennzeichnet, dass** man texturierte Milchproteinen einsetzt, die nach dem Abkühlen und Entspannen entweder
(a) in stückige Form gebracht, tiefgekühlt und anschließend wieder aufgetaut worden oder
(b) in stückige Form gebracht und anschließend in Brühe gekocht worden sind.

12. Verwendung nach mindestens einem der Ansprüche 1 bis 11, **dadurch gekennzeichnet, dass** man die texturierten Milchproteine in Mengen von 1 bis 99 Gew.-% - bezogen auf das Nahrungsmittel einsetzt.

## Claims

1. Use of texturized dairy proteins, obtainable by or obtained by
(a) a mixture consisting of
(a1) 25 to 75 percent by weight casein or caseinates, and
(a2) 75 to 25 percent by weight of a plant protein and/or a fibre material, with the proviso that the quantities add up to 100 percent by weight,
(b) extruding the mixture in the presence of water or whey while applying a temperature gradient of 20 to 200 °C and a pressure in the range of 100000 Pa (1 bar) to 20000000 Pa (200 bar), and
(c) subsequently expanding the extrudate,
as a substitute for carbohydrates and a source of protein in food.

2. Use according to claim 1, **characterised in that** texturized dairy proteins are used in which the component (a2) is plant proteins and/or plant fibre material.

3. Use according to at least one of claims 1 to 2, **characterized in that** texturized dairy proteins are used, in which the mixtures of (a1) casein or caseinates and (a2) plant proteins or fibre material are extruded in the presence of 10 to 50% by weight of water and/or whey - based on the total amount of raw materials used, i.e. quantity of components (a1+a2) and water and/or whey.

4. Use according to at least one of claims 1 to 2, **characterized in that** texturized dairy proteins are used, in which the mixtures of (a1) casein or caseinates and (a2) plant proteins or fibre material are extruded in the presence of 50 to 75% by weight of water and/or whey - based on the total amount of raw materials used, i.e. quantity of components (a1+a2) and water and/or whey.

5. Use according to at least one of claims 1 to 4, **characterized in that** texturized dairy proteins are used, in which the mixtures of (a1) casein or caseinates and (a2) plant proteins or fibres are extruded while applying a temperature gradient leading from 40 °C to 180 °C.

6. Use according to at least one of claims 1 to 5, **characterized in that** texturized dairy proteins are used, in which the mixtures of (a1) casein or caseinates and (a2) plant proteins or fibres are extruded while applying a non-linear temperature gradient starting at a temperature of 20 to 40 °C at the inlet via a peak temperature of 160 to 200 °C in the centre, and a decline to 100 to 140 °C at the outlet of the extruder.

7. Use according to at least one of claims 1 to 6, **characterized in that** texturized dairy proteins are used, in which the mixtures of (a1) casein or caseinates and (a2) plant proteins or fibres are extruded while applying a pressure gradient, leading from 100000 Pa (1 bar) to 500000 bis 20000000 Pa (200 bar), depending on process and equipment.

8. Use according to at least one of claims 1 to 7, **characterized in that** texturized dairy proteins are used, which are expanded in one step to normal pressure after exiting the extruder, and converted into a chunky shape.

9. Use according to at least one of claims 1 to 8, **characterized in that** texturized dairy proteins are used, which are expanded in a cooling bath after exiting the extruder.

10. Use according to at least one of claims 1 to 9, **characterized in that** texturized dairy proteins are used, which are passed into a cooling channel under pressure after exiting the extruder, and unloaded at normal pressure.

11. Use according to at least one of claims 1 to 10, **characterized in that** texturized dairy proteins are used, which after cooling and expanding are either
(a) converted into a chunky shape, are deep-frozen and subsequently thawed again, or
(b) converted into a chunky shape and subsequently boiled in stock.

12. Use according to at least one of claims 1 to 11, **characterized in that** texturized dairy proteins are used in quantities of 1 to 99 percent by weight, based on the food product.

## Revendications

1. Utilisation de protéines laitières texturées, pouvant être obtenues, ou obtenues par le fait que
(a) on fournit un mélange constitué de
(a1) 25 à 75 % en poids de caséine ou de caséinates et
(a2) 75 à 25 % en poids d'une protéine végétale et/ou d'une matière fibreuse,
à la condition que la somme des indications de pourcentage corresponde à 100 % en poids,
(b) on extrude le mélange en présence d'eau et de lactosérum, par application d'un gradient de température de 20 à 200 °C et sous une pression dans la plage de 100 000 Pa (1 bar) à 20 000 000 Pa (200 bar) et
(c) puis on détend l'extrudat,
en tant que succédané de glucide et source de protéines dans des produits alimentaires.

2. Utilisation selon la revendication 1, **caractérisée en ce qu'**on utilise des protéines laitières texturées dans lesquelles le composant (a2) représente des protéines végétales et/ou une matière fibreuse végétale.

3. Utilisation selon au moins l'une des revendications 1 et 2, **caractérisée en ce qu'**on utilise des protéines laitières texturées dans lesquelles on extrude les mélanges de (a1) caséine ou caséinates, ainsi que de (a2) protéines végétales ou d'une matière fibreuse, en présence de 10 à 50 % en poids d'eau et/ou de lactosérum - par rapport à la quantité totale des matières premières utilisées, c'est-à-dire la quantité des composants (a1 + a2) et de l'eau et/ou du lactosérum.

4. Utilisation selon au moins l'une des revendications 1 et 2, **caractérisée en ce qu'on** utilise des protéines laitières texturées dans lesquelles on extrude les mélanges de (a1) caséine ou caséinates, ainsi que de (a2) protéines végétales ou d'une matière fibreuse, en présence de 50 à 75 % en poids d'eau et/ou de lactosérum, par rapport à la quantité totale des matières premières utilisées, c'est-à-dire à la quantité des composants (a1 + a2) et de l'eau et/ou de lactosérum.

5. Utilisation selon au moins l'une des revendications 1 à 4, **caractérisée en ce qu'**on utilise des protéines laitières texturées dans lesquelles on extrude les mélanges de (a1) caséine ou caséinates, ainsi que de (a2) protéines végétales ou d'une matière fibreuse, par application d'un gradient de température qui va de 40 °C à 180 °C.

6. Utilisation selon au moins l'une des revendications 1 à 5, **caractérisée en ce qu'**on utilise des protéines laitières texturées dans lesquelles on extrude les mélanges de (a1) caséine ou caséinates ainsi que de (a2) protéines végétales ou d'une matière fibreuse, par application d'un gradient de température non linéaire partant d'une température de 20 à 40 °C à l'entrée, en passant par une température maximale de 160 à 200 °C au milieu, pour tomber entre 100 et 140 °C en sortie de l'extrudeuse.

7. Utilisation selon au moins l'une des revendications 1 à 6, **caractérisée en ce qu'on** utilise des protéines laitières texturées dans lesquelles on extrude les mélanges de (a1) caséine ou caséinates, ainsi que de (a2) protéines végétales ou d'une matière fibreuse, par application d'un gradient de pression, qui, selon le procédé et l'application, va de 100 000 Pa (1 bar) à 500 000 à 20 000 000 Pa (200 bar).

8. Utilisation selon au moins l'une des revendications 1 à 7, **caractérisée en ce qu'**on utilise des protéines laitières texturées qui, après sortie de l'extrudeuse, ont été détendues en une étape à la pression normale, et ont été mises sous forme de paillettes.

9. Utilisation selon au moins l'une des revendications 1 à 8, **caractérisée en ce qu'**on utilise des protéines laitières texturées qui, après sortie de l'extrudeuse, ont été détendues dans un bain de refroidissement.

10. Utilisation selon au moins l'une des revendications 1 à 9, **caractérisée en ce qu'**on utilise des protéines laitières texturées qui, après sortie de l'extrudeuse, ont été envoyées sous pression dans un canal de refroidissement, refroidies et évacuées sous la pression normale.

11. Utilisation selon au moins l'une des revendications 1 à 10, **caractérisée en ce qu'**on utilise des protéines laitières texturées qui, après refroidissement et détente, soit
(a) ont été mises sous forme de paillettes, lyophilisées puis de nouveau décongelées, soit
(b) ont été mises sous forme de paillettes puis ont été bouillies en bouillon.

12. Utilisation selon au moins l'une des revendications 1 à 11, **caractérisée en ce qu'**on utilise les protéines laitières texturées en des quantités de 1 à 99 % en poids - par rapport au produit alimentaire.
